# EUROPÄISCHE PATENTSCHRIFT

(11) **EP 3 782 454 B1**
(45) Veröffentlichungstag und Bekanntmachung des Hinweises auf die Patenterteilung: **18.02.2026**
(21) Anmeldenummer: 20175334.0
(22) Anmeldetag: 19.05.2020
(51) Int. Cl.: A01F 7/06, A01F 12/10

(54) **MÄHDRESCHER MIT ZUFÜHRTROMMEL UND EINLAUFSEGMENT ZUR VERBESSERTEN GUTSTROMAUFTEILUNG IN ZWEI AXIALE STRÖME**
COMBINE HARVESTER WITH FEED DRUM AND INTAKE SEGMENT FOR AN IMPROVED CROP FLOW PARTITION INTO TWO AXIAL FLOWS
MOISSONNEUSE-BATTEUSE AVE TAMBOUR D'ALIMENTATION ET SEGMENT D'ENTRÉE POUR UNE RÉPARTITION AMÉLIORÉE DU FLUX DE RÉCOLTE EN DEUX COURANTS AXIAUX

(30) Priorität: 20.08.2019 DE 102019122331
(43) Veröffentlichungstag der Anmeldung: 24.02.2021
(73) Patentinhaber: CLAAS Selbstfahrende Erntemaschinen GmbH, 33428 Harsewinkel (DE)
(72) Erfinder: Bußmann, Jens, 49179 Ostercappeln (DE); Esken, Dirk, 59494 Soest-Meckingsen (DE)
(74) Vertreter: CLAAS Gruppe

(56) Entgegenhaltungen:
- EP-A1- 3 335 543
- EP-A2- 0 591 688
- WO-A1-2010/086063
- DE-A1- 3 429 468

## Beschreibung

Die vorliegende Erfindung betrifft eine Zuführtrommel eines selbstfahrenden Mähdreschers gemäß dem Oberbegriff des Anspruchs 1.

Ein Mähdrescher mit einer Zuführtrommel ist aus der WO2010/086063 A1 bekannt.

Der Mähdrescher umfasst ein nach dem Tangentialflussprinzip arbeitendes Dreschwerk und eine nach dem Axialflussprinzip arbeitende Abscheidevorrichtung, welche zwei parallel zueinander angeordnete Axialrotoren aufweist. Das Dreschwerk umfasst eine Dreschtrommel sowie eine dieser nachgeordneten Zuführtrommel, die das von der Dreschtrommel abgegebene Erntegut der Zuführtrommel nachgeordneten, nach dem Axialflussprinzip arbeitenden Abscheidevorrichtung zuführt. Die Dreschtrommel weist einen aus mehreren zylindrischen Grundelementen gebildeten Trommelkörper auf, auf dessen Umfangsfläche mehrere, zueinander beabstandete Schlagleisten angeordnet sind, die sich über die Breite des Trommelkörpers erstrecken und den Trommelkörper in radialer Richtung abschnittsweise überragen. Der Dreschtrommel ist weiterhin ein Abscheidekorb zugeordnet, durch den ausgedroschenes Erntegut abgeschieden wird. Die Zuführtrommel ist im Einlaufbereich der Abscheidevorrichtung angeordnet und dient der Zuführung des Ernteguts in die Abscheidevorrichtung. Die WO2010/086063 A1 thematisiert die Aufteilung der Erntegutzuführung zu dem jeweiligen Axialrotor der Abscheidevorrichtung durch die Zuführtrommel. Dabei stößt die Zuführtrommel bei geringen Umfangsgeschwindigkeiten und/oder hohen Erntegutdurchsätzen hinsichtlich der Aufteilung des Erntegutstromes der Zuführtrommel an ihre Grenzen. Beispielsweise können Verstopfungen oder Blockaden der Zuführtrommel auftreten. Ein weiterer Mähdrescher mit einer Zuführtrommel ist aus der EP 0 591 688 A2 bekannt.

Aufgabe der vorliegenden Erfindung ist es, eine Zuführtrommel bereitzustellen, die eine verbesserte Aufteilung des Ernteguts auf die Axialrotoren erreicht.

Diese Aufgabe wird bei einem Mähdrescher nach dem Oberbegriff des Anspruchs 1 durch die Merkmale des kennzeichnenden Teils von Anspruch 1 gelöst.

Gemäß dem Anspruch 1 wird ein selbstfahrender Mähdrescher mit einer Abscheidevorrichtung vorgeschlagen, die zwei Axialrotoren mit jeweils einem vorgeordneten Einlaufbereich und einem dem Einlaufbereich vorgeordneten Einlaufsegment aufweist sowie einer Zuführtrommel mit einer Mantelfläche, die der Abscheidevorrichtung vorgeordnet und zum Zuführen eines Erntegutstroms in die Abscheidevorrichtung vorgesehen ist, wobei die Zuführtrommel als Trenntrommel ausgebildet ist, welche einen Gutstrom in zwei Teilströme unterteilt, wobei die Zuführtrommel auf ihrer Mantelfläche in ihren Mittenbereich in Umfangsrichtung im Wesentlichen V-förmig ausgebildete Leitelemente aufweist, wobei die Zuführtrommel auf ihrer Mantelfläche in ihren äußeren Bereich weitere seitliche Leitelemente aufweist, die im Wesentlichen schräg zur Zuführrichtung des Ernteguts verlaufen, wobei die Zuführtrommel auf ihrer Mantelfläche weitere sich im Wesentlichen längs über ihre Mantelfläche erstreckende Leitelemente aufweist, die im Wesentlichen zwischen den V-förmigen Leitelementen sowie seitlichen Leitelementen angeordnet sind. Erfindungsgemäß ist vorgesehen, dass zumindest die V-förmigen Leitelemente und/oder die seitlichen Leitelemente beabstandet von den sich im Wesentlichen längs erstreckenden Leitelementen angeordnet sind.

Die beabstandete Anordnung der V-förmigen Leitelemente und/oder der seitlichen Leitelemente von den sich im Wesentlichen längs erstreckenden Leitelementen ermöglicht einen Gutstrom der zwischen den V-förmigen Leitelementen und den sich im Wesentlichen längs erstreckenden Leitelementen fließt und/oder einen Gutstrom der zwischen den seitlichen Leitelementen und den sich im Wesentlichen längs erstreckenden Leitelementen fließt. Hierdurch wird ein Aufstauen des Ernteguts vor den sich längs erstreckenden Elementen vermieden und somit die Gefahr eines Blockierens der Zuführtrommel reduziert.

Weiterhin ermöglicht die beabstandete Anordnung zwischen den V-förmigen Leitelementen und den sich im Wesentlichen längs erstreckenden Leitelementen und/oder zwischen den seitlichen Leitelementen und den sich im Wesentlichen längs erstreckenden Leitelementen einen zumindest um den Abstand zwischen den jeweiligen Leitelementen verlängerten, in Richtung des Einlaufbereichs des jeweiligen Axialrotors gerichteten Gutstrom.

Bevorzugt können sämtliche Leitelemente beabstandet zueinander angeordnet sein, um die Gefahr eines Aufstauens von Erntegut und somit die Gefahr eines Blockierens der Zuführtrommel weiter zu reduzieren.

Erfindungsgemäß sind die Leitelemente jeweils als ein fest mit der Mantelfläche der Zuführtrommel verbundenes Trägerelement sowie ein diesem in Rotationsrichtung lösbar zugeordnetes Verschleißelement ausgebildet, wobei das Verschleißelement im Wesentlichen die Oberfläche der Trägerelemente in Rotationsrichtung bedeckt. Die Verwendung von lösbaren Verschleißelementen, bei denen ein Austausch nach einer entsprechenden Abnutzung vorgesehen ist, führt zu einer erhöhten Lebensdauer der Zuführtrommel.

Insbesondere weisen die Trägerelemente Stützelemente auf, die auf der zur Rotationsrichtung entgegengesetzten Seite der Trägerelemente angeordnet sind, um Kräfte, die in Rotationsrichtung auf die Trägerelemente wirken, aufzunehmen und somit die Stabilität der Trägerelemente zu erhöhen.

Eine vorteilhafte Weiterbildung sieht vor, dass sich die Stützelemente im Wesentlichen in Rotationsrichtung über die Mantelfläche der Zuführtrommel erstrecken, wobei die Stützelemente unter einen Winkel zum Trägerelement angeordnet sind, sodass sich diese entgegengesetzt zur Rotationsrichtung der Symmetrieachse des Trägerelements annähern. Somit wird eine Behinderung des Gutstroms durch die Stützelemente vermieden.

Weiterhin ist vorgesehen, dass sich die Stützelemente entgegengesetzt zur Rotationsrichtung in ihrem Abstand zur Rotationsachse der Zuführtrommel verjüngen. Dies dient ebenfalls der Vermeidung einer Behinderung des Gutstroms durch die Stützelemente.

Vorteilhaft ist es, wenn die Trägerelemente und/oder Stützelemente mit der Mantelfläche der Zuführtrommel verschweißt sind. Dies gewährleistet eine ausreichende Befestigung der Trägerelemente und/oder Stützelemente auf der Mantelfläche. Aufwendige Befestigungselemente wie beispielsweise Schrauben, die zu einer Erhöhung des Gewichts der Zuführtrommel führen, werden vermieden und der Montageaufwand reduziert.

Erfindungsgemäß ist das Einlaufsegment unterhalb der Zuführtrommel angeordnet, wobei das Einlaufsegment und/oder Teile davon austauschbar und/oder verstellbar angeordnet sind. Durch Austauschen des Einlaufsegments kann der Mähdrescher an verschiedenes Erntegut, wechselnde Erntebedingungen, besondere Ernteumstände und/oder Verschleiß des Einlaufsegments oder seiner Teile angepasst werden. Ein Verstellen des Einlaufsegments oder seiner Teile ermöglicht bei einer Vergrößerung eines Spaltes zwischen der Zuführtrommel und dem Einlaufsegment eine Verbesserung der Gutförderung und dadurch des Erntegutstroms in die Abscheidevorrichtung. Dadurch können Gutstaus, insbesondere am frontseitigen Einlaufende der Abscheidevorrichtung, vermieden werden. Ein zu kleiner Spalt kann zudem zu einer stärkeren Belastung des Ernteguts und schlechter Strohqualität führen und erfordert eine höhere Antriebsleistung.

Erfindungsgemäß sind die austauschbaren und/oder verstellbaren Teile des Einlaufsegments als ein oder mehrere insbesondere schräge oder V-förmige Leitelemente, Rampen und/oder Schneidelemente ausgeführt. Ein Austauschen oder Verstellen von solchen Teilen, beispielsweise ein Austauschen einer Rampe gegen ein V-förmiges Leitelement oder ein Anheben eines Schneidelements kann zudem zu einer besseren Gutteilung führen.

Erfindungsgemäß weist die Zuführtrommel im Mittenbereich der Mantelfläche zumindest zwei parallel angeordnete, sich in Rotationsrichtung erstreckende Messer auf, die bei einer Rotation der Trommel ein Schneidelement am Einlaufsegment längsseitig umschließen. Die parallelen Messer dienen der Trennung des Ernteguts im Mittenbereich, und trennen insbesondere das Stroh, welches entlang des Mittenbereichs der Zuführtrommel geführt wird, sodass eine bessere Auftrennung bzw. Aufteilung des zugeführten Ernteguts in zwei Teilströme, die den beiden Axialrotoren zugeführt werden, erreicht wird.

Aus dem längsseitigen Umschließen des Schneidelements am Einlaufsegment beim Rotieren der Zuführtrommel durch die parallel angeordneten Messer, wird das Erntegut scherenartig durchtrennt, wodurch eine verbesserte Schneidwirkung erzielt wird. Weiterhin kann das Schneidelement am Einlaufsegment verschwenkbar angeordnet sein, sodass eine Anpassung an die Erntebedingungen ermöglicht wird. Dabei können jeweils zwei parallel angeordneten Messer in Rotationsrichtung in Verlängerung an die V-förmigen Leitelemente ausgebildet sein, sodass das von den Messern getrennte Erntegut unmittelbar nach dem Trennvorgang in Richtung des Einlaufbereichs der Axialrotoren geleitet wird.

Weiterhin ist vorgesehen, dass sich die parallel angeordneten Messer in Rotationsrichtung in ihrem Abstand zur Rotationsachse der Zuführtrommel verjüngen. Hierdurch ergibt sich in Rotationsrichtung ein Wirkbereich der Messer, welcher sich in radialer Richtung der Zuführtrommel im Wesentlichen über die gesamte Höhe des V-förmigen Leitelements erstreckt.

Vorteilhaft ist es, wenn die parallel angeordneten Messer austauschbar befestigt sind, sodass ein einfacher Austausch stumpfer oder verschlissener Messer möglich ist.

In einer bevorzugten Ausführungsform sind die sich im Wesentlichen längs über die Mantelfläche der Zuführtrommel erstreckenden Leitelemente in Rotationsrichtung hintereinander angeordnet, wobei diese jeweils zwischen den V-förmigen Leitelementen und den seitlichen Leitelementen in drei im Wesentlichen nebeneinander befindlichen Reihen aus hintereinander angeordneten Leitelementen ausgebildet sind. Die strukturierte Anordnung ermöglicht ein gleichmäßiges Zuführen des Ernteguts an die Axialrotoren.

Dabei können die Leitelemente der äußeren Reihen, der in jeweils drei nebeneinander befindlichen Reihen angeordneten Leitelemente, in Rotationsrichtung parallel zueinander angeordnet sein und die Leitelemente der äußeren beiden Reihen in Rotationsrichtung alternierend zu denen der mittleren Reihe ausgebildet sein. Die alternierende Anordnung führt dazu, dass Erntegut, welches zwischen zwei beabstandeten Leitelementen hindurch fließt von einem in Rotationsrichtung hinter diesen befindlichen und neben diesen angeordneten Leitelement erfasst wird.

Bevorzugt befindet sich in entgegengesetzter Rotationsrichtung an den jeweiligen Endbereichen der V-förmigen Leitelemente jeweils ein Stützelement, wobei zumindest ein Vektor zwischen den Endbereichen der beiden Stützelemente die parallel angeordneten Messer schneidet. Der Wirkbereich der parallel angeordneten Messer wird somit zumindest Teilweise von den in Rotationsrichtung nachgeordneten Stützelementen, die den nachgeordneten V-förmigen Leitelement zugeordnet sind, umschlossen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen Ausschnitt aus einem erfindungsgemäßen selbstfahrenden Mähdrescher mit einer Abscheidevorrichtung in einer Seitenansicht;
- Figur 2: eine Frontansicht einer erfindungsgemäßen Zuführtrommel;
- Figur 3a: eine Seitenansicht des Einlaufsegments mit einem darauf angeordneten Schneidelement sowie einen Ausschnitt des unteren Bereichs der Zuführtrommel;
- Figur 3b: eine Seitenansicht des Einlaufsegments mit ausgeschwenkten Messer sowie der Zuführtrommel;
- Figur 3c: eine Seitenansicht des Einlaufsegments mit eingeschwenkten Messer sowie der Zuführtrommel;
- Figur 4: eine Frontansicht des Einlaufsegments mit den nachgeordneten Einlaufbereichen der Axialrotoren.

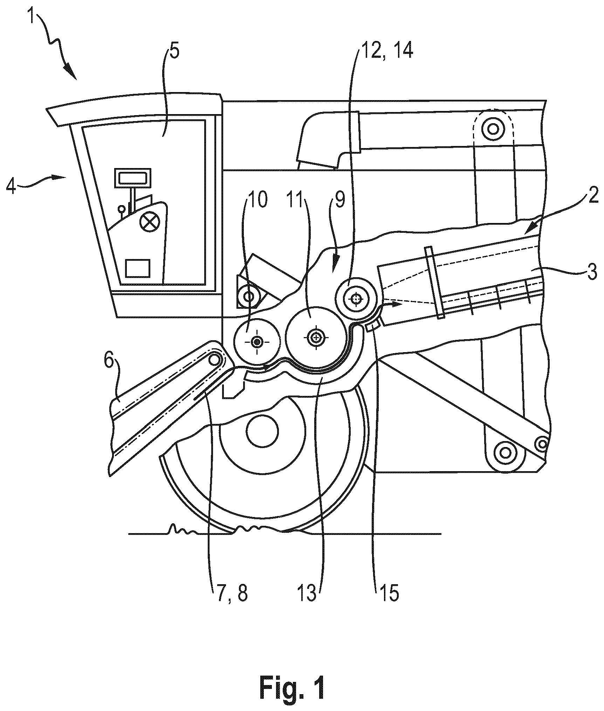

Fig. 1 zeigt einen Ausschnitt aus einem erfindungsgemäßen selbstfahrenden Mähdrescher 1, der eine Abscheidevorrichtung 2 mit zwei nebeneinander angeordneten Axialrotoren 3 aufweist. Eine Fahrtrichtung des Mähdreschers 1 ist durch einen Pfeil FR gezeigt. Die Abscheidevorrichtung 2 und die Axialrotoren 3 sind in Fahrtrichtung FR ausgerichtet.

Der Mähdrescher 1 weist eine Frontseite 4 auf, an der eine Fahrerkabine 5 für einen Bediener (nicht gezeigt) angeordnet ist. An der Frontseite 4 ist zudem ein Schneidwerk (nicht gezeigt) angeordnet, welches Erntegut (nicht gezeigt) aufnimmt. Das Schneidwerk leitet das Erntegut in einen unterhalb der Fahrerkabine 5 angeordneten Einzugkanal 6, über den das Erntegut als Erntegutstrom 7 in Förderrichtung 8 in ein Dreschwerk 9 des Mähdreschers 1 geleitet wird.

Das Dreschwerk 9 weist im dargestellten Ausführungsbeispiel drei Trommeln 10, 11, 12 auf, nämlich eine Beschleunigungstrommel 10, die einer Dreschtrommel 11 vorgeordnet ist, die Dreschtrommel 11 sowie eine der Dreschtrommel 11 nachgeordnete Zuführtrommel 12. Die Beschleunigungstrommel 10 ist zum Beschleunigen und zum Vordreschen des Ernteguts sowie zum Zuführen des Ernteguts zur Dreschtrommel 11 vorgesehen. Die Dreschtrommel 11 drischt das Erntegut. Die Trommeln 10-12 des Dreschwerks 9 sind quer zur Fahrtrichtung FR angeordnet. Unterhalb der Beschleunigungstrommel 10 und der Dreschtrommel 11 ist ein Dreschkorb 13 angeordnet. Durch den Dreschkorb 13 wird gelöstes Korn (nicht gezeigt) aus dem Erntegutstrom 7 abgeschieden.

Die erfindungsgemäße und noch näher zu beschreibende Zuführtrommel 12 übergibt das Erntegut einer nachgeordneten Abscheidevorrichtung 2, die zwei Axialrotoren 3 umfasst. Dafür ist die Zuführtrommel 12 als Trenntrommel 14 ausgebildet, die den Erntegutstrom 7 in zwei Teilströme 24 unterteilt, die jeweils einem der beiden Axialrotoren 3 zugeführt werden. Weiterhin ist unterhalb der Zuführtrommel 12 ein Einlaufsegment 15 angeordnet. Das Einlaufsegment 15 weist einen gegenüber der Zuführtrommel 12 größeren Durchmesser (nicht bezeichnet) auf und umgibt die Zuführtrommel 12 zumindest teilweise. Es bildet einen Einlaufbereich in die Abscheidevorrichtung 2. Der Mähdrescher 1 ist hier als Hybridmaschine ausgebildet. Die Erfindung betrifft aber auch Axialrotormaschinen, die kein separates Dreschwerk 9 aufweisen, sondern bei denen der Axialrotor 3 auch zum Dreschen des Ernteguts ausgebildet ist.

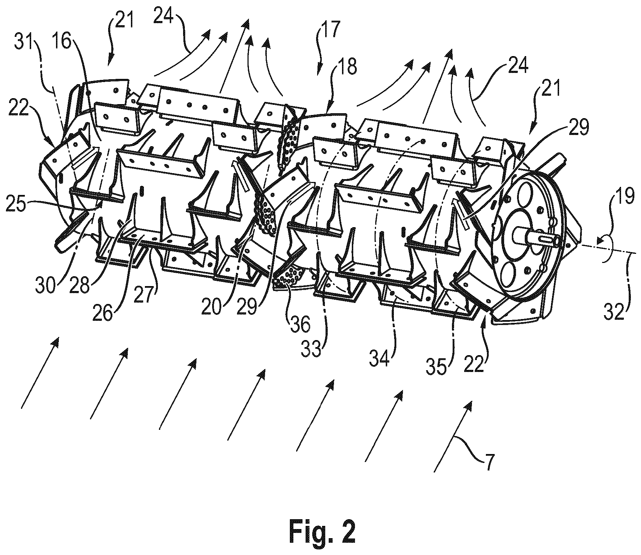

Die besondere Ausgestaltung der Zuführtrommel 12 wird anhand von Fig. 2 detailliert beschrieben. Vorliegend weist die Zuführtrommel 12 eine geschlossene Mantelfläche 16 auf.

Auf der Mantelfläche 16 sind in ihrem Mittenbereich 17 im Wesentlichen V-förmige Leitelemente 18 ortsfest mit der Mantelfläche 16 verbunden, die in Rotationsrichtung 19 der Zuführtrommel 12 spitz zulaufen. Jedes V-förmige Leitelemente 18 ist so auf der Mantelfläche 16 angeordnet, dass es in Rotationsrichtung 19 eine Symmetrieachse 20 aufweist.

Weiterhin sind auf der Mantelfläche 16 in ihren äußeren Bereich 21 weitere seitliche Leitelemente 22 ortsfest mit der Mantelfläche 16 verbunden, die sich im Wesentlichen schräg zum Erntegutstrom 7 erstrecken.

Die seitlichen Leitelemente 22 sowie die V-förmigen Leitelemente 18 dienen einer Umlenkung des im Wesentlichen tangential der Zuführtrommel 12 zugeführten Erntegutstroms 7 in Richtung der Einlaufbereiche 23 der beiden Axialrotoren 3, welche sich jeweils in einem der Zuführtrommel 12 nachgeordneten Bereich befinden, die sich jeweils entgegengesetzt zur Fahrtrichtung FR im Wesentlichen zwischen den V-förmigen Leitelementen 18 und seitlichen Leitelementen 22 erstrecken.

Der im Wesentlichen tangential der Zuführtrommel 12 zugeführte Erntegutstrom 7 wird durch die V-förmigen Leitelemente 18 der Zuführtrommel 12 in zwei Teilströme 24 umgeleitet. Weiterhin wird der Erntegutstrom 7 aus dem Mittenbereich 17 sowie den äußeren Bereichen 21 der Zuführtrommel 12 durch die seitlichen Leitelemente 22 und die V-förmigen Leitelemente 18 abgeleitet, um eine optimale Zuführung des Ernteguts an die Axialrotoren 3 zu erreichen.

Sich längs über die Mantelfläche 16 erstreckende Leitelemente 25 sind im Wesentlichen zwischen den seitlichen und V-förmigen Leitelementen 18 angeordnet und ortsfest mit der Mantelfläche 16 verbunden und dienen der Beschleunigung des Ernteguts in Rotationsrichtung 19 der Zuführtrommel 12.

Erfindungsgemäß sind die sich längs erstreckenden Leitelemente 25 beabstandet von den seitlichen Leitelementen 22 sowie von den V-förmigen Leitelementen 18 angeordnet, um den Erntegutstrom 7 zwischen den V-förmigen Leitelementen 18 und den sich längs erstreckenden Leitelementen 25 sowie zwischen den seitlichen Leitelementen 22 und den sich längs erstreckenden Leitelementen 25 zu ermöglichen. Hierdurch wird ein aufstauen des Ernteguts vor den Leitelementen 18, 22, 25 vermieden und somit die Gefahr eines Blockierens der Zuführtrommel 12 reduziert.

Weiterhin ermöglicht die beabstandete Anordnung zwischen den V-förmigen Leitelementen 18 und den sich im Wesentlichen längs erstreckenden Leitelementen 25 sowie zwischen den seitlichen Leitelementen 22 und den sich im Wesentlichen längs erstreckenden Leitelementen 25 einen zumindest um den Abstand zwischen den jeweiligen Leitelementen 18, 22, 25 verlängerten, in Richtung des Einlaufbereichs 23 des jeweiligen Axialrotors 3 gerichteten Gutstrom 29.

Die sich längs erstreckenden Leitelemente 25 sind ebenfalls beabstandet zueinander angeordnet, wodurch hier ebenfalls Erntegut zwischen den einzelnen sich längs erstreckenden Leitelementen 25 entlang fließt und die Gefahr eines Aufstauens des Ernteguts vor den Leitelementen 18, 22, 25 und somit die Gefahr eines Blockierens der Zuführtrommel 12 weiter reduziert wird.

Die einzelnen Leitelemente 18, 22, 25 setzen sich jeweils aus einem mit der Mantelfläche 16 verschweißten Trägerelement 26 sowie ein diesem in Rotationsrichtung 19 lösbar vorgeordneten Verschleißelement 27 zusammen. Das Verschleißelement 27 bedeckt im Wesentlichen die Oberfläche des jeweiligen Trägerelements 26 in Rotationsrichtung 19. Im dargestellten Ausführungsbeispiel sind die Trägerelemente 26 mit den Verschleißelementen 27 verschraubt.

Auf der sich entgegengesetzt zur Rotationsrichtung 19 der Zuführtrommel 12 befindlichen Seite der Trägerelemente 26 sind den Trägerelementen 26 Stützelemente 28 zugeordnet. Die Stützelemente 28 erstrecken sich im Wesentlichen in Rotationsrichtung 19 über die Mantelfläche 16 der Zuführtrommel 12 und sind angewinkelt zum Trägerelement 26 angeordnet, sodass sich diese entgegengesetzt zur Rotationsrichtung 19 der Symmetrieachse 20, 30, 31 des jeweiligen Trägerelements 26 annähern, um eine Beeinflussung des Gutstroms durch die Stützelemente 28 zu reduzieren. Des Weiteren verjüngen sich die Stützelemente 28 entgegengesetzt zur Rotationsrichtung 19 in ihrem Abstand zur Rotationsachse 32 der Zuführtrommel 12, um den Einfluss der Stützelemente 28 auf den Gutstrom weiter zu reduzieren. Im dargestellten Ausführungsbeispiel sind die Stützelemente 28 mit der Mantelfläche 16 sowie den Trägerelementen 26 verschweißt. Denkbar sind aber auch alternative Verbindungsmöglichkeiten, wie beispielsweise ein Verschrauben oder Nieten. In einer weiteren, alternativen Ausführungsform können die Trägerelemente 26 und Stützelemente 28 ebenfalls aus einer durchgängigen Struktur bestehen, die beispielsweise gegossen ist oder durch Umformen in die entsprechende Form gebracht wird. Neben der in der Fig. 2 dargestellten Ausführungsform liegt es im Rahmen der Erfindung den Trägerelementen 26 beliebig viele Stützelemente 28 in einer symmetrischen oder asymmetrischen Anordnung zuzuordnen.

Die sich längs erstreckenden Leitelemente 25 sind zwischen den V-förmigen Leitelementen 18 und den seitlichen Leitelementen 22 jeweils in drei sich nebeneinander befindlichen Reihen 33-35 aus in Rotationsrichtung 19 hintereinander angeordneten sich längs erstreckenden Leitelementen 25 ausgebildet. Die sich längs erstreckenden Leitelemente 25 der äußeren Reihen 33, 35 der in jeweils drei nebeneinander befindlichen Reihen 33-35 ausgebildeten Leitelemente 25 sind in Rotationsrichtung 19 parallel zueinander und alternierend zu den Leitelementen 25 der mittleren Reihe 34 angeordnet.

Die sich längs erstreckenden Leitelemente 25 der mittleren Reihe 34 der in jeweils drei nebeneinander befindlichen Reihen 33-35 weisen im dargestellten Ausführungsbeispiel eine größere Erstreckung längs entlang der Mantelfläche 16 auf als die Leitelemente 25 der äußeren beiden Reihen 33, 35. Die Erstreckung längs entlang der Mantelfläche 16 der Leitelemente 25 der mittleren Reihe 34 kann in einer alternativen Ausführungsform an die Größe der Zuführtrommel 12 angepasst werden, sodass diese mit der Größe der Zuführtrommel steigt oder fällt. Dies ermöglicht den Einsatz vieler Gleichteile für verschiedene Größen der Zuführtrommel 12.

In Rotationsrichtung 19 sind in Verlängerung an die V-förmigen Leitelemente 18 jeweils zwei parallele Messer 36 austauschbar angeordnet. Die parallelen Messer 36 erstrecken sich in Rotationsrichtung 19 über die Mantelfläche 16 der Zuführtrommel 12 und verjüngen sich in Rotationsrichtung 19 in ihrem Abstand zur Rotationsachse 32 der Zuführtrommel 12. Die parallelen Messer 36 trennen das Erntegut, insbesondere das Stroh, welches entlang des Mittenbereichs 17 der Zuführtrommel 12 geführt wird.

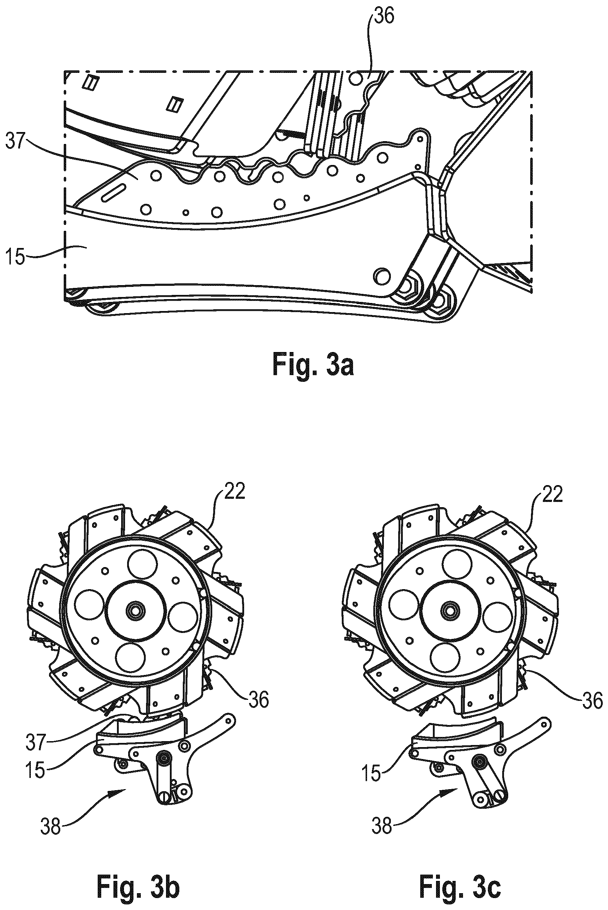

In Fig. 3a ist eine Seitenansicht des Einlaufsegments 15 mit einem darauf angeordneten Schneidelement 37 sowie ein Ausschnitt der Zuführtrommel 12 dargestellt. Wie Fig. 3a zeigt, erstreckt sich das Schneidelement 37 in Rotationsrichtung 19 der Zuführtrommel 12 und ist mittig am Einlaufsegment 15 positioniert, sodass bei einer Rotation der Zuführtrommel 12 die parallelen Messer 36 der Zuführtrommel 12 das Schneidelement 37 längsseitig umschließen. Hieraus resultiert ein scherenartiges Durchtrennen des Ernteguts, wodurch eine verbesserte Schneidwirkung erzielt wird.

Das Schneidelement 37 ist verschwenkbar am Einlaufsegment 15 angeordnet. Mittels einer nicht weiter erläuterten Verschwenkvorrichtung 38 ist, wie Fig. 3b und Fig. 3c darstellen, ein Verschwenken des Schneidelements 37 in Richtung der Zuführtrommel 12 möglich. In Abhängigkeit von den Erntebedingungen kann der Abstand zwischen den parallel angeordneten Messern 36 und dem Schneidelement 37 variiert werden.

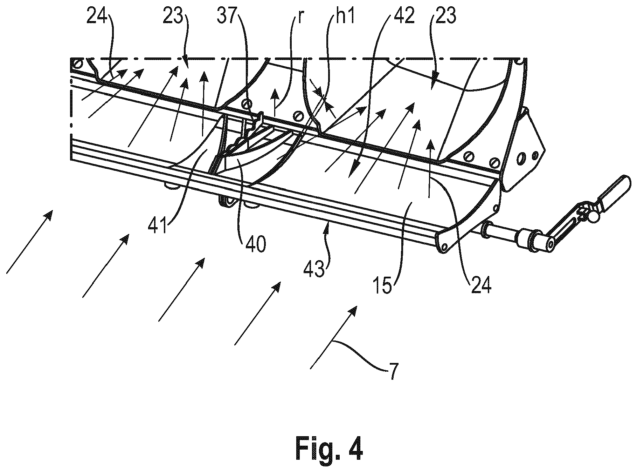

Wie Fig. 4 zeigt, kann in einer weiteren vorteilhaften Ausgestaltung das Einlaufsegment 15 zusätzlich zu den Schneidelementen 37 V-förmige Gutstromteiler oder andere schräge oder bogenförmige Leitelemente 40 aufweisen. Weiterhin können die V-förmigen Gutstromteiler oder andere schräge oder bogenförmige Leitelemente 40 höhenverstellbar vorgesehen sein. Um den Erntegutstrom 7 zu beeinflussen kann das Einlaufsegment 15 zusätzlich oder alternativ eine Rampe 41 aufweisen. Die Rampe 41 ist in und gegen eine Verstellrichtung r höhenverstellbar vorgesehen. Dabei wird eine Höhe h1 der Rampe 41 gegenüber der Oberseite 42 des Einlaufsegments 15 verstellt. Dafür sind an einer Unterseite 43 des Einlaufsegments 15 Verstellmittel (nicht gezeigt) angeordnet, an denen eine Verstellmechanik (nicht gezeigt) anbringbar ist. Die Höhe h1 der Rampe 41 wird erntegutabhängig und/oder in Abhängigkeit von den Erntebedingungen eingestellt. Es ist eine mittige Positionierung der V-förmigen Gutstromteiler oder anderen schrägen oder bogenförmigen Leitelemente 40 und/oder Rampe 41 auf dem Einlaufsegment 15 vorgesehen, sodass diese mit den V-förmigen Leitelementen 18 und parallelen Messern 36 zusammenwirken.

### Bezugszeichenliste:

| | | | |
|---|---|---|---|
| 1 | Mähdrescher | 33 | Reihe hintereinander angeordneter Leitelemente |
| 2 | Abscheidevorrichtung | 34 | Reihe hintereinander angeordneter Leitelemente |
| 3 | Axialrotoren | 35 | Reihe hintereinander angeordneter Leitelemente |
| 4 | Frontseite | 36 | Parallele Messer |
| 5 | Fahrerkabine | 37 | Schneidelement |
| 6 | Einzugkanal | 38 | Verschwenkvorrichtung |
| 7 | Erntegutstrom | 39 | Leitelement Einlaufsegment |
| 8 | Förderrichtung | 40 | V-förmiger Gutstromteiler, Leitelement |
| 9 | Dreschwerk | 41 | Rampe |
| 10 | Beschleunigungstrommel | 42 | Oberseite |
| 11 | Dreschtrommel | 43 | Unterseite |
| 12 | Zuführtrommel | 44 | |
| 13 | Dreschkorb | 45 | |
| 14 | Trenntrommel | 46 | |
| 15 | Einlaufsegment | 47 | |
| 16 | Mantelfläche | 48 | |
| 17 | Mittenbereich | 49 | |
| 18 | V-förmiges Leitelement | 50 | |
| 19 | Rotationsrichtung | 51 | |
| 20 | Symmetrieachse V-förmiges Leitelement | 52 | |
| 21 | Äußere Bereich Zuführtrommel | 53 | |
| 22 | Seitliche Leitelemente | 54 | |
| 23 | Einlaufbereich | 55 | |
| 24 | Teilströme | 56 | |
| 25 | Längs erstreckende Leitelemente | 57 | |
| 26 | Trägerelement | 58 | |
| 27 | Verschleißelement | 59 | |
| 28 | Stützelemente | FR | Fahrtrichtung |
| 29 | Gerichteter Gutstrom | r | Verstellrichtung |
| 30 | Symmetrieachse längs erstreckendes Leitelement | h1 | Höhe der Rampe |
| 31 | Symmetrieachse seitliches Leitelement | | |
| 32 | Rotationsachse Zuführtrommel | | |

## Patentansprüche

1. Selbstfahrender Mähdrescher (1) mit einer Abscheidevorrichtung (2), die zwei Axialrotoren (3) mit jeweils einem vorgeordneten Einlaufbereich (23) und einem dem Einlaufbereich (23) vorgeordneten Einlaufsegment (15) aufweist sowie einer Zuführtrommel (12) mit einer Mantelfläche (16), die der Abscheidevorrichtung (2) vorgeordnet und zum Zuführen eines Erntegutstroms (7) in die Abscheidevorrichtung (2) vorgesehen ist, wobei die Zuführtrommel (12) als Trenntrommel (14) ausgebildet ist, welche einen Erntegutstrom (7) in zwei Teilströme (24) unterteilt, wobei die Zuführtrommel (12) auf ihrer Mantelfläche (16) in ihrem Mittenbereich (17) in Umfangsrichtung im Wesentlichen V-förmig ausgebildete Leitelemente (18) aufweist, wobei die Zuführtrommel (12) auf ihrer Mantelfläche (16) in ihrem äußeren Bereich (21) weitere seitliche Leitelemente (22) aufweist, die im Wesentlichen schräg zum Erntegutstrom (7) des Ernteguts verlaufen, wobei die Zuführtrommel (12) auf ihrer Mantelfläche (16) weitere sich im Wesentlichen längs über ihre Mantelfläche (16) erstreckende Leitelemente (25) aufweist, die im Wesentlichen zwischen den V-förmigen Leitelementen (18) sowie seitlichen Leitelementen (22) angeordnet sind, wobei zumindest die V-förmigen Leitelemente (18) und/oder die seitlichen Leitelemente (22) beabstandet von den sich im Wesentlichen längs erstreckenden Leitelementen (25) angeordnet sind, wobei das Einlaufsegment (15) unterhalb der Zuführtrommel (12) angeordnet ist, **dadurch gekennzeichnet, dass** die Leitelemente (18, 22, 25) jeweils als ein fest mit der Mantelfläche (16) der Zuführtrommel (12) verbundenes Trägerelement (26) sowie ein diesem in Rotationsrichtung (19) lösbar zugeordnetes Verschleißelement (27) ausgebildet sind, wobei das Verschleißelement (27) im Wesentlichen die Oberfläche der Trägerelemente (26) in Rotationsrichtung (19) bedeckt, wobei das Einlaufsegment (15) und/oder Teile davon austauschbar und/oder verstellbar angeordnet sind, wobei die austauschbaren und/oder verstellbaren Teile des Einlaufsegments (15) ein oder mehrere Schneidelemente (37) umfassen und bevorzugt zusätzlich, insbesondere schräge oder V-förmige, Leitelemente (40) und/oder Rampen (41) umfassen, wobei die Zuführtrommel (12) im Mittenbereich (17) der Mantelfläche (16) zumindest zwei parallel angeordnete, sich in Rotationsrichtung (19) erstreckende Messer (36) aufweist, die bei einer Rotation der Trommel das wenigstens eine Schneidelement (37) am Einlaufsegment (15) längsseitig umschließen.

2. Selbstfahrender Mähdrescher (1) nach Anspruch 1, **dadurch gekennzeichnet, dass** sämtliche Leitelemente (18, 22, 25) beabstandet zueinander angeordnet sind.

3. Selbstfahrender Mähdrescher (1) nach einem der Ansprüche 1 bis 2, **dadurch gekennzeichnet, dass** die Trägerelemente (26) Stützelemente (28) aufweisen, die auf der zur Rotationsrichtung (19) entgegengesetzten Seite der Trägerelemente (26) angeordnet sind.

4. Selbstfahrender Mähdrescher (1) nach einem der Anspruch 3, **dadurch gekennzeichnet, dass** sich die Stützelemente (28) im Wesentlichen in Rotationsrichtung (19) über die Mantelfläche (16) der Zuführtrommel (12) erstrecken, wobei die Stützelemente (28) unter einen Winkel zum Trägerelement (26) angeordnet sind, sodass sich diese entgegengesetzt zur Rotationsrichtung (19) der Symmetrieachse (20, 30, 31) des Trägerelements (26) annähern.

5. Selbstfahrender Mähdrescher (1) nach einem der Ansprüche 3 bis 4, **dadurch gekennzeichnet, dass** sich die Stützelemente (28) entgegengesetzt zur Rotationsrichtung (19) in ihrem Abstand zur Rotationsachse (32) der Zuführtrommel (12) verjüngen.

6. Selbstfahrender Mähdrescher (1) nach einem der Ansprüche 1 bis 5, **dadurch gekennzeichnet, dass** die Trägerelemente (26) und/oder Stützelemente (28) mit der Mantelfläche (16) der Zuführtrommel (12) verschweißt sind.

7. Selbstfahrender Mähdrescher (1) nach Anspruch 1, **dadurch gekennzeichnet, dass** jeweils zwei parallel angeordneten Messer (36) in Rotationsrichtung (19) in Verlängerung an die V-förmigen Leitelemente (18) ausgebildet sind.

8. Selbstfahrender Mähdrescher (1) nach einem der Ansprüche 1 bis 6, **dadurch gekennzeichnet, dass** sich die parallel angeordneten Messer (36) in Rotationsrichtung (19) in ihrem Abstand zur Rotationsachse (32) der Zuführtrommel (12) verjüngen.

9. Selbstfahrender Mähdrescher (1) nach einem der Ansprüche 1 bis 8, **dadurch gekennzeichnet, dass** die parallel angeordneten Messer (36) austauschbar befestigt sind.

10. Selbstfahrender Mähdrescher (1) nach einem der Ansprüche 1 bis 9, **dadurch gekennzeichnet, dass** die sich im Wesentlichen längs über die Mantelfläche (16) der Zuführtrommel (12) erstreckenden Leitelemente (25) in Rotationsrichtung (19) hintereinander angeordnet sind, wobei diese jeweils zwischen den V-förmigen Leitelementen (18) und den seitlichen Leitelementen (22) in drei im Wesentlichen nebeneinander befindlichen Reihen (33-35) aus hintereinander angeordneten Leitelementen (25) ausgebildet sind.

11. Selbstfahrender Mähdrescher (1) nach einem der Ansprüche 1 bis 10, **dadurch gekennzeichnet, dass** die Leitelemente (25) der äußeren Reihen (33, 35) der in jeweils drei nebeneinander befindlichen Reihen (33-35) angeordneten Leitelemente (25), in Rotationsrichtung (19) parallel zueinander angeordnet sind und die Leitelemente (25) der äußeren beiden Reihen (33, 35) in Rotationsrichtung (19) alternierend zu denen der mittleren Reihe (24) ausgebildet sind.

12. Selbstfahrender Mähdrescher (1) nach einem der Ansprüche 1 bis 11, , **dadurch gekennzeichnet, dass** sich in entgegengesetzter Rotationsrichtung (19) an den jeweiligen Endbereichen der V-förmigen Leitelemente (18) jeweils ein Stützelement (28) befindet, wobei zumindest ein Vektor zwischen den Endbereichen der beiden Stützelemente (28) die parallel angeordneten Messer (36) schneidet.

## Claims

1. Self-propelled combine harvester (1) with a separator (2) which has two axial rotors (3) each with a front intake region (23) and an intake segment (15) upstream of the intake region (23), and a feed drum (12) with an envelope surface (16) that is upstream of the separator (2) and is provided for feeding a crop flow (7) into the separator (2), wherein the feed drum (12) is formed as a separation drum (14) which divides a crop flow (7) into two sub-flows (24), wherein the feed drum (12) on its envelope surface (16), in its central region (17), has guide elements (18) which are designed to be substantially V-shaped in the circumferential direction, wherein the feed drum (12) on its envelope surface (16), in its outer region (21), has additional lateral guide elements (22) which extend substantially obliquely to the crop flow (7) of the crop, wherein the feed drum (12) on its envelope surface (16) has additional guide elements (25) which extend substantially longitudinally over the envelope surface (16) of said feed drum and are disposed substantially between the V-shaped guide elements (18) and lateral guide elements (22), wherein at least the V-shaped guide elements (18) and/or the lateral guide elements (22) are disposed so as to be spaced apart from the substantially longitudinally extending guide elements (25), wherein the intake segment (15) is disposed below the feed drum (12), **characterized in that** the guide elements (18, 22, 25) are in each case formed as a carrier element (26) which is fixedly connected to the envelope surface (16) of the feed drum (12) and as a wearing element (27) which is releasably assigned to said carrier element in the direction of rotation (19), wherein the wearing element (27) substantially covers the surface of the carrier elements (26) in the direction of rotation (19), wherein the intake segment (15) and/or parts thereof are disposed so as to be replaceable and/or adjustable, wherein the replaceable and/or adjustable parts of the intake segment (15) comprise one or a plurality of cutting elements (37) and, preferably additionally, in particular oblique or V-shaped guide elements (40) and/or ramps (41), wherein the feed drum (12) in the central region (17) of the envelope surface (16) has at least two blades (36) which are disposed in parallel and extend in the direction of rotation (19) and during rotation of the drum enclose the at least one cutting element (37) on the intake segment (15) longitudinally.

2. Self-propelled combine harvester (1) according to Claim 1, **characterized in that** all guide elements (18, 22, 25) are disposed so as to be mutually spaced apart.

3. Self-propelled combine harvester (1) according to one of Claims 1 to 2, **characterized in that** the carrier elements (26) have support elements (28) which are disposed on that side of the carrier elements (26) that is opposite to the direction of rotation (19).

4. Self-propelled combine harvester (1) according to Claim 3, **characterized in that** the support elements (28) extend substantially in the direction of rotation (19) over the envelope surface (16) of the feed drum (12), wherein the support elements (28) are disposed at an angle to the carrier element (26) in such a way that they approach the axis of symmetry (20, 30, 31) of the carrier element (26) in the direction opposite to the direction of rotation (19).

5. Self-propelled combine harvester (1) according to one of Claims 3 to 4, **characterized in that** the support elements (28) in terms of their spacing from the rotation axis (32) of the feed drum (12) taper in the direction opposite to the direction of rotation (19).

6. Self-propelled combine harvester (1) according to one of Claims 1 to 5, **characterized in that** the carrier elements (26) and/or support elements (28) are welded to the envelope surface (16) of the feed drum (12).

7. Self-propelled combine harvester (1) according to Claim 1, **characterized in that** two blades (36) which are disposed in parallel are in each case designed as extensions of the V-shaped guide elements (18) in the direction of rotation (19).

8. Self-propelled combine harvester (1) according to one of Claims 1 to 6, **characterized in that** the blades (36) which are disposed in parallel, in terms of their spacing from the rotation axis (32) of the feed drum (12), taper in the direction of rotation (19).

9. Self-propelled combine harvester (1) according to one of Claims 1 to 8, **characterized in that** the blades (36) which are disposed in parallel are fastened so as to be replaceable.

10. Self-propelled combine harvester (1) according to one of Claims 1 to 9, **characterized in that** the guide elements (25) which extend substantially longitudinally over the envelope surface (16) of the feed drum (12) are disposed behind one another in the direction of rotation (19), wherein these are in each case formed between the V-shaped guide elements (18) and the lateral guide elements (22) in three rows (33-35) which are located so as to be substantially next to one another and consist of guide elements (25) disposed behind one another.

11. Self-propelled combine harvester (1) according to one of Claims 1 to 10, **characterized in that** the guide elements (25) of the outer rows (33, 35) of the guide elements (25), which are in each case disposed in three rows (33-35) located next to one another, are disposed so as to be mutually parallel in the direction of rotation (19), and the guide elements (25) of the two outer rows (33, 35) are formed so as to alternate with those of the central row (24) in the direction of rotation (19).

12. Self-propelled combine harvester (1) according to one of Claims 1 to 11, **characterized in that** one support element (28) is in each case located in the direction opposite to the direction of rotation (19) on the respective end regions of the V-shaped guide elements (18), wherein at least one vector between the end regions of the two support elements (28) intersects the blades (36) disposed in parallel.

## Revendications

1. Moissonneuse-batteuse (1) automotrice, comprenant un dispositif de séparation (2) qui présente deux rotors axiaux (3) dotés chacun d'une zone d'entrée (23) placée en amont et d'un segment d'entrée (15) placé en amont de la zone d'entrée (23), et comprenant un tambour d'alimentation (12) doté d'une surface enveloppante (16), placé en amont du dispositif de séparation (2) et prévu pour amener un flux de récolte (7) dans le dispositif de séparation (2), le tambour d'alimentation (12) étant réalisé comme tambour de séparation (14) qui divise un flux de récolte (7) en deux flux partiels (24), le tambour d'alimentation (12) comportant, sur sa surface enveloppante (16), dans sa région médiane (17), des éléments de guidage (18) réalisés sensiblement en forme de V dans la direction périphérique, le tambour d'alimentation (12) comportant, sur sa surface enveloppante (16), dans sa région extérieure (21), des éléments de guidage latéraux (22) supplémentaires qui s'étendent sensiblement en biais par rapport au flux (7) de la récolte, le tambour d'alimentation (12) comportant, sur sa surface enveloppante (16), d'autres éléments de guidage (25) qui s'étendent sensiblement dans le sens longitudinal sur sa surface enveloppante (16) et qui sont disposés pour l'essentiel entre les éléments de guidage (18) en forme de V et des éléments de guidage latéraux (22), sachant qu'au moins les éléments de guidage (18) en forme de V et/ou les éléments de guidage latéraux (22) sont disposés à distance des éléments de guidage (25) s'étendant sensiblement dans le sens longitudinal, le segment d'entrée (15) étant placé sous le tambour d'alimentation (12), **caractérisée en ce que** les éléments de guidage (18, 22, 25) sont réalisés respectivement comme élément support (26) relié solidement à la surface enveloppante (16) du tambour d'alimentation (12) et comme élément d'usure (27) associé de façon amovible à celui-ci, dans le sens de rotation (19), l'élément d'usure (27) recouvrant sensiblement la surface des éléments supports (26) dans le sens de rotation (19), le segment d'entrée (15) et/ou des parties de celui-ci étant installés de manière échangeable et/ou réglable, les parties échangeables et/ou réglables du segment d'entrée (15) incluant un ou plusieurs éléments de coupe (37) et incluant de préférence en outre des éléments de guidage (40), notamment en biais ou en forme de V, et/ou des rampes (41), le tambour d'alimentation (12) présentant, dans la zone médiane (17) de la surface enveloppante (16), au moins deux couteaux (36) qui sont disposés de façon parallèle, s'étendent dans le sens de rotation (19) et entourent l'élément de coupe (37), au nombre d'au moins un, sur le côté longitudinal sur le segment d'entrée (16), lors d'une rotation du tambour.

2. Moissonneuse-batteuse (1) automotrice selon la revendication 1, **caractérisée en ce que** tous les éléments de guidage (18, 22, 25) sont disposés à distance les uns des autres.

3. Moissonneuse-batteuse (1) automotrice selon une des revendications 1 à 2, **caractérisée en ce que** les éléments supports (26) présentent des éléments d'appui (28) qui sont disposés sur le côté des éléments supports (26) opposé au sens de rotation (19).

4. Moissonneuse-batteuse (1) automotrice selon une de la revendication 3, **caractérisée en ce que** les éléments d'appui (28) s'étendent sensiblement dans le sens de rotation (19) sur la surface enveloppante (16) du tambour d'alimentation (12), les éléments d'appui (28) étant disposés en formant un angle avec l'élément support (26), de sorte que ceux-ci se rapprochent de l'axe de symétrie (20, 30, 31) de l'élément support (26), dans le sens opposé au sens de rotation (19).

5. Moissonneuse-batteuse (1) automotrice selon une des revendications 3 à 4, **caractérisée en ce que** les éléments d'appui (28) rétrécissent dans le sens opposé au sens de rotation (19), en ce qui concerne leur distance par rapport à l'axe de rotation (32) du tambour d'alimentation (12).

6. Moissonneuse-batteuse (1) automotrice selon une des revendications 1 à 5, **caractérisée en ce que** les éléments supports (26) et/ou les éléments d'appui (28) sont soudés à la surface enveloppante (16) du tambour d'alimentation (12).

7. Moissonneuse-batteuse (1) automotrice selon la revendication 1, **caractérisée en ce que** respectivement deux couteaux (36) disposés de façon parallèle sont réalisés dans le prolongement des éléments de guidage (18) en forme de V, dans le sens de rotation (19).

8. Moissonneuse-batteuse (1) automotrice selon une des revendications 1 à 6, **caractérisée en ce que** les couteaux (36) disposés de façon parallèle rétrécissent dans le sens de rotation (19), en ce qui concerne leur distance par rapport à l'axe de rotation (32) du tambour d'alimentation (12).

9. Moissonneuse-batteuse (1) automotrice selon une des revendications 1 à 8, **caractérisée en ce que** les couteaux (36) disposés de façon parallèle sont fixés de manière échangeable.

10. Moissonneuse-batteuse (1) automotrice selon une des revendications 1 à 9, **caractérisée en ce que** les éléments de guidage (25), qui s'étendent sensiblement dans le sens longitudinal sur la surface enveloppante (16) du tambour d'alimentation (12), sont disposés les uns derrière les autres dans le sens de rotation (19), ceux-ci étant réalisés respectivement entre les éléments de guidage (18) en forme de V et les éléments de guidage latéraux (22), en trois rangées (33 à 35) sensiblement adjacentes les unes aux autres, constituées d'éléments de guidage (25) disposés les uns derrière les autres.

11. Moissonneuse-batteuse (1) automotrice selon une des revendications 1 à 10, **caractérisée en ce que** les éléments de guidage (25) des rangées extérieures (33, 35) des éléments de guidage (25) installés respectivement en trois rangées (33 à 35) adjacentes les unes aux autres sont disposés parallèlement les uns aux autres dans le sens de rotation (19), et les éléments de guidage (25) des deux rangées extérieures (33, 35) sont réalisés en alternance avec ceux de la rangée du milieu (24).

12. Moissonneuse-batteuse (1) automotrice selon une des revendications 1 à 11, **caractérisée en ce que** dans le sens opposé au sens de rotation (19), un élément d'appui (28) se situe respectivement sur les parties d'extrémité des éléments de guidage (18) en forme de V, au moins un vecteur entre les parties d'extrémité des deux éléments d'appui (28) coupant les couteaux (36) disposés de façon parallèle.
